Europäisches Patentamt

European Patent Office

Office européen des brevets

(11) Veröffentlichungsnummer: **0 193 545**
**B1**

(12) **EUROPÄISCHE PATENTSCHRIFT**

(45) Veröffentlichungstag der Patentschrift:
**05.10.88**

(51) Int. Cl.⁴: **G 11 B 23/02**, G 11 B 33/04

(21) Anmeldenummer: **85903998.4**

(22) Anmeldetag: **10.08.85**

(86) Internationale Anmeldenummer:
**PCT/EP 85/00410**

(87) Internationale Veröffentlichungsnummer:
**WO 86/01328 (27.02.86** Gazette 86/5)

(54) **PLATTENBEHÄLTER.**

(30) Priorität: **17.08.84 DE 8424403 U**

(43) Veröffentlichungstag der Anmeldung:
**10.09.86 Patentblatt 86/37**

(45) Bekanntmachung des Hinweises auf die Patenterteilung:
**05.10.88 Patentblatt 88/40**

(84) Benannte Vertragsstaaten:
**DE FR GB IT**

(56) Entgegenhaltungen:
**EP - A - 0 112 966**
**DE - A - 2 307 410**
**FR - A - 2 004 274**
**GB - A - 332 665**
**GB - A - 347 332**

(73) Patentinhaber: **idn inventions and development of novelties ag, Hartbertstrasse 9, CH-7002 Chur (CH)**

(72) Erfinder: **ACKERET, Peter, Allmendstrasse 18, CH-8700 Küsnacht (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

**Beschreibung**

Die Erfindung betrifft einen Behälter für Schall- oder Bildplatten oder ähnliche flache Aufzeichnungsträger, wie Magnetplatten, mit einem Gehäuse, in dem die Platten in eng benachbarten Aufnahmefächern unterbringbar und einzeln entnehmbar sind. Ein derartiger Behälter ist in der DE-C-1 131 026 beschrieben und dargestellt.

Der bekannte Behälter ist eigentlich ein Schrank für Langspielplatten. Er weist, hinter einer abklappbaren Tür, dünne plattenförmige Halter auf, auf denen jeweils eine Langspielplatte in ihrer Hülle Platz findet. Neben den so gebildeten Aufnahmefächern ist eine Leiste mit Wähltasten vorgesehen, und durch Betätigen einer Wähltaste wird ein zugeordneter Halter von einer Federanordnung ein Stück nach aussen gefördert, so dass die Platte zugänglich wird. Um die Platte aufzuräumen, läuft der Vorgang umgekehrt ab.

Moderne Aufzeichnungsträger, etwa laserabtastbare Schall- oder Bildplatten, sind gegen Fingerberührung relativ unempfindlich, so dass man sie gegebenenfalls auch im Bereich ihrer Aufzeichnungsspuren anfassen darf. Bei entsprechenden Abspielgeräten für die sogenannten «Compactdiscs» gibt es auch Bauarten, insbesondere zur Verwendung in Kraftfahrzeugen, bei denen die Compactdiscs nicht auf einen Plattenteller axial aufgelegt werden muss, sondern einfach durch einen Schlitz in der Gerätefrontwand eingeschoben wird.

Aufgabe der Erfindung ist es, einen besonders für Compactdiscs geeigneten Behälter zu schaffen, der den nachstehend geschilderten Bedingungen für die Benutzung in Kraftfahrzeugen Rechnung trägt (wobei es sich versteht, dass er in seiner Anwendung natürlich nicht darauf beschränkt ist).

Es liegt in der Natur der Sache, dass die Bedienung des Behälters, das heisst Auswahl und Entnahme der Disc und späteres Wiedereinführen in das betreffende Aufnahmefach, mit einer Hand möglich sein muss. Ferner sollte die Bedienung so einfach sein, dass der Fahrer nicht vom Strassenverkehr abgelenkt wird. Und schliesslich soll ein solcher Behälter, als Massenprodukt, möglichst preisgünstig gefertigt werden können. Geringster Platzbedarf ist erwünscht, verbunden mit leichter Bedienbarkeit. Zur Lösung dieser Aufgabe werden, ausgehend von den im Oberbegriff des Anspruchs 1 genannten Merkmalen, die in seinem kennzeichnenden Teil genannten Merkmale vorgeschlagen.

Wenn man die Compactdiscs extrem dicht stapelt, um auf geringstem Raum ein Maximum an Disc unterzubringen, so ist gemäss der Erfindung dafür gesorgt, dass trotzdem das Aufsuchen eines bestimmten Fachs, insbesondere aber das Einlegen der Disc in dieses Fach gleichsam «ohne Hinschauen» erfolgen können. Die Erfindung ermöglicht auch die Erfüllung der übrigen Forderungen – preisgünstige Herstellung, Ein-Hand-Bedienung – wie bei der nachfolgenden Erörterung von Ausführungsbeispielen verdeutlicht wird.

Die beigefügten Zeichnungen sind weitgehend schematisiert und auf das Wesentliche beschränkt.

Fig. 1 bis 6 zeigen in Frontansicht unterschiedliche Behälter gemäss der Erfindung;

Fig. 7 bis 12 sind jeweils zu den nebenstehend gezeichneten Frontansichten gehörige Längsschnitte;

Fig. 13 zeigt im Querschnitt parallel zur Disc-Hauptebene ein Disc-Ausschubsystem, weitgehend schematisiert;

Fig. 14 ist eine weitere Längsschnittdarstellung eines Behälters in zu Fig. 7 bis 12 analoger Darstellung;

Fig. 15 zeigt einen dazugehörigen Querschnitt analog zu Fig. 13, und

Fig. 16 zeigt in einer Darstellung analog zu Fig. 13, 15 ein alternatives Disc-Ausschubsystem.

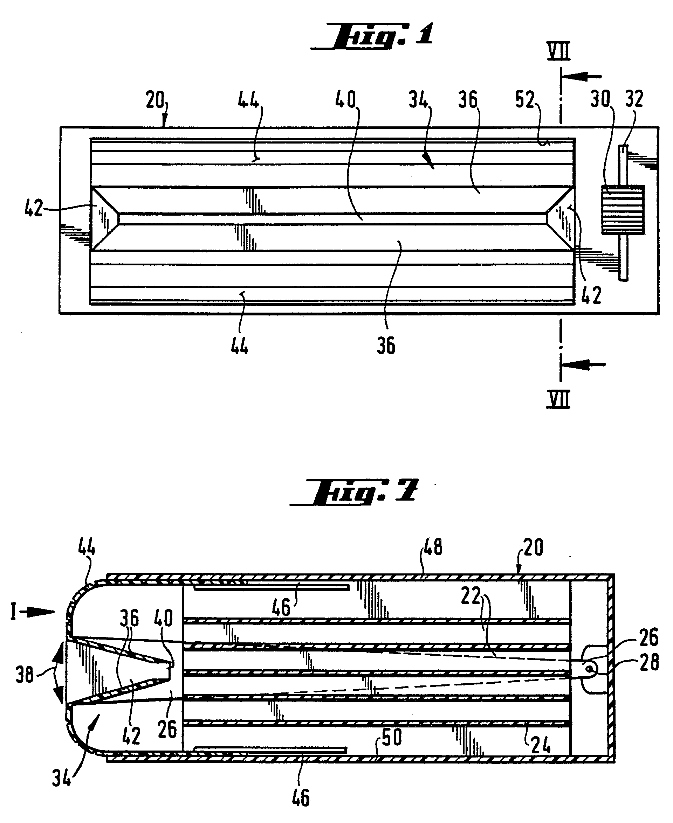

Der Behälter nach Fig. 1 und 7 umfasst ein Gehäuse 20 mit Aufnahmefächern 22 für je eine Compactdisc. Die Fächer sind voneinander durch im Gehäuse stationär eingebaute Platten 24 getrennt. Zwei Hebel 26 sind seitlich neben den Platten 24 um eine Achse 28 mittels einer Grifftaste 30 schwenkbar, die in einem Schlitz 32 neben dem eigentlichen Aufnahmeraum des Gehäuses 20 geführt ist. Am freien Ende der Hebel 26 ist eine Leitanordnung 34 befestigt, bestehend aus zwei trichterartig angeordneten Leisten 36, die einen breiten Einlass 38 und einen schmalen Auslass 40 gemeinsam mit den Zwickeln 42 der Hebelenden begrenzen. Die einander zugewandten Seiten der Leisten 36 sind zweckmässigerweise nicht ganz eben, sondern leicht auswärts gewölbt, so dass eine Disc sie nur im spurfreien Randbereich berühren kann (dies ist in den Zeichnungen nicht dargestellt, gilt aber analog für alle Ausführungsbeispiele). An die äusseren Endkanten der Leisten 36 schliessen sich flexible Blenden, z. B. Lamellenblenden 44, an, deren Enden sich in Führungen 46 unmittelbar unter der Gehäusedeckwand 48 bzw. oberhalb der Gehäusebodenwand 50 erstrecken. Demgemäss ist die frontseitige Gehäuseöffnung 52 in jeder durch die Taste 30 wählbaren Position der Leitanordnung vollständig abgedeckt bis auf den Auslass 40 der letzteren. Der Grifftaste 30 ist eine Rastanordnung (nicht gezeigt) zugeordnet, die in solchen Positionen der Leitanordnung einrasten, in denen ihr Auslass 40 mit einem der Aufnahmefächer fluchtet.

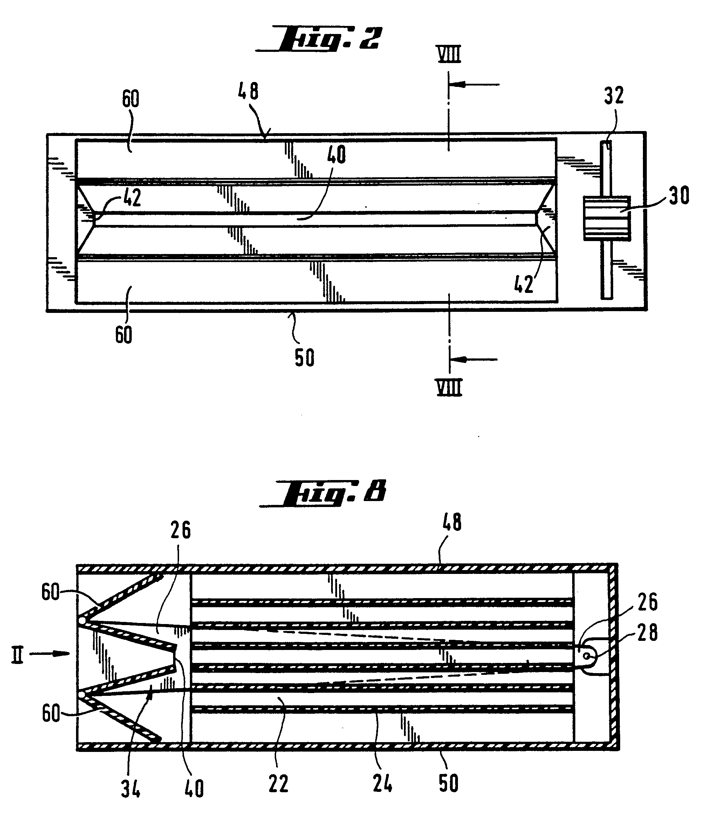

Bei der Ausführungsform nach Fig. 2 und 8 sind die in Fig. 1, 7 vorgesehenen flexiblen Blenden durch auswärts federvorgespannte Klappen 60 ersetzt, die sich je nach der Position der Leitanordnung an die Innenseiten von Gehäusedeck- bzw. Bodenwandung anlegen.

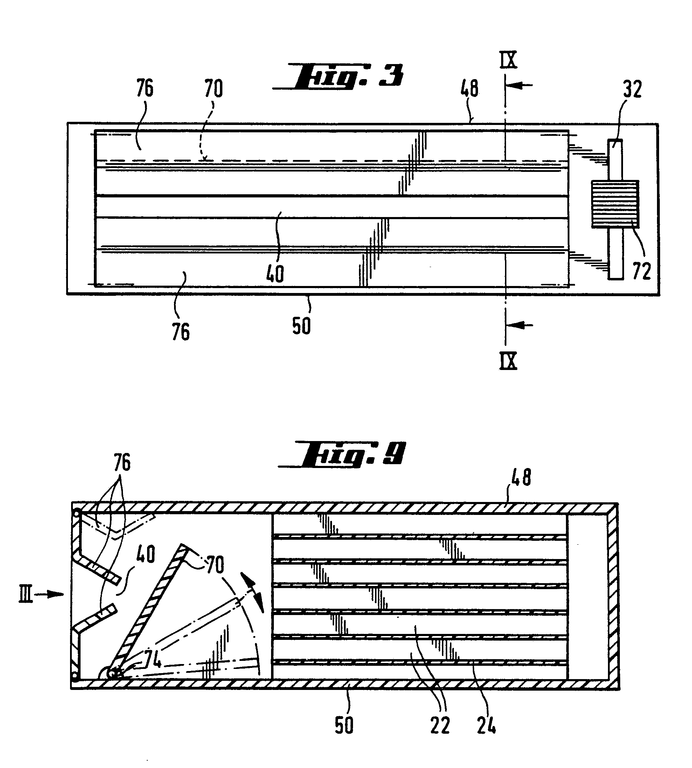

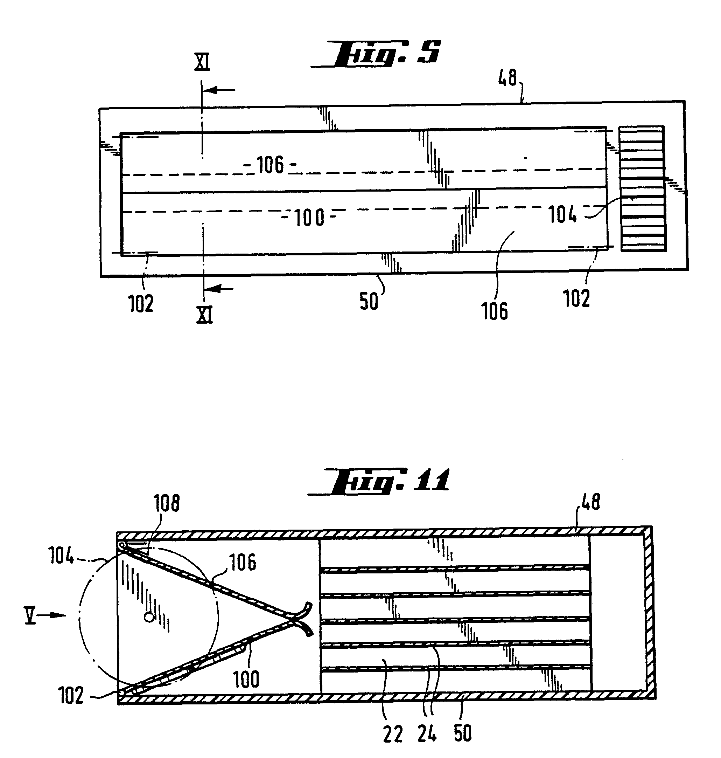

Bei der Ausführungsform nach Fig. 3 und 9 ist die von einer Klappe 70 gebildete Leitanordnung mittels Schiebeknopf 72 auf die gewünschte Rastposition um die Achse 74 verschwenkbar, so dass ihre freie Kante jeweils mit der Unterkante des betreffenden Aufnahmefaches fluchtet. Die federnd auslenkbaren Schwenkwinkel 76 vervollständigen die Leitanordnung und sorgen für eine ästhetisch ansprechende Frontgestaltung.

Bei der Ausführungsform nach Fig. 4 und 10 befinden sich unter dem Aufnahmeraum 80 des Gehäuses 82 Wähltasten 84, mittels denen eine Leitanordnung in Rastpositionen um die Achse 86 verschwenkbar ist. Die Leitanordnung umfasst eine obere Klappe 87 und eine mit ihr über seitliche Wangen 88 verbundene untere Klappe 90. Die Wähltasten drücken gegen einen an die Leitanordnung angeformten Hebelarm 92, wobei die Einschubtiefe der Tasten entsprechend dem gewünschten Fach unterschiedlich ist.

Die Ausführungsform nach Fig. 5 und 11 umfasst eine Leitanordnung, bestehend aus einem ersten Leitblech 100, das an der unteren Gehäusekante 102 angelenkt ist und mittels eines Einstellrades 104 in Rastpositionen bringbar ist. An die freie Kante des ersten Leitblechs legt sich an die freie Kante eines zweiten Leitblechs 106 unter der Vorspannung einer Schenkelhalsfeder 108 an. Die Abrundungen an den freien Enden der beiden Leitbleche sorgen dafür, dass jeweils die Berührungslinie beider Leitbleche ausgefluchtet in bezug auf das jeweilige Aufnahmefach steht.

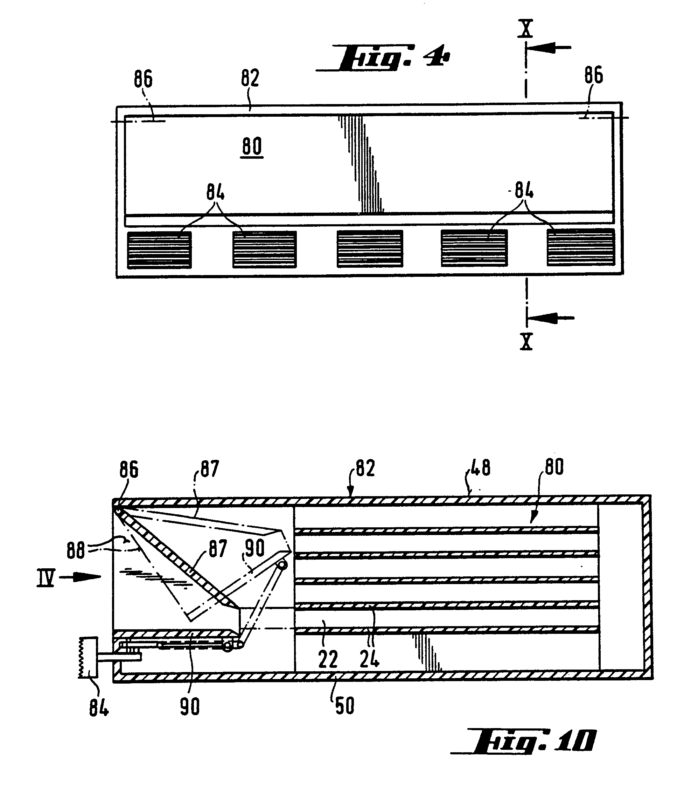

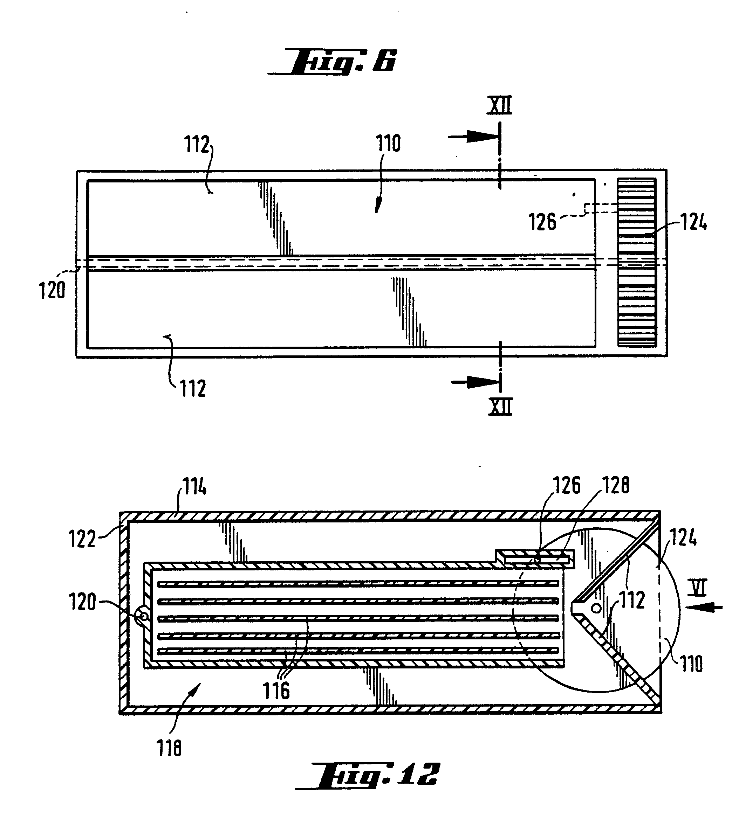

Die bisher behandelten Ausführungsformen basierten sämtlich auf dem Konzept, dass die Leitanordnung oder Teile derselben relativ zu dem Gehäuse und zu den Aufnahmefächern bewegbar waren. Bei der Ausführungsform nach Fig. 6 und 12 hingegen ist die Leitanordnung 110, bestehend aus in der Gehäusefront angeordneten trichterartig einspringenden Leisten 112, fest mit dem Gehäuse 114 verbunden. Die Aufnahmefächer 116 befinden sich in einer Baugruppe 118, die bei 120 nahe der Gehäuserückwand 122 angelenkt ist und mit ihrem frontseitigen Ende, wo sich die Aufnahmefächer öffnen, relativ zum Auslass der Leitanordnung verschwenkbar ist. Hierfür ist ein vom Benutzer verdrehbares Handrad 124 mit Rastpositionen vorgesehen, von dem sich ein Mitnehmerzapfen 126 in ein Langloch 128 in der Baugruppe 118 erstreckt.

Aus Gründen der besseren Übersichtlichkeit wurden in Fig. 1–12 keine Einzelheiten der Systeme dargestellt, mittels denen die einzelnen Discs aus ihren Aufnahmefächern durch den Auslass der Leitanordnung bis zu einer Stelle gefördert werden können, in der sie vor dem Einlass der Leitanordnung vom Benutzer erfasst werden können.

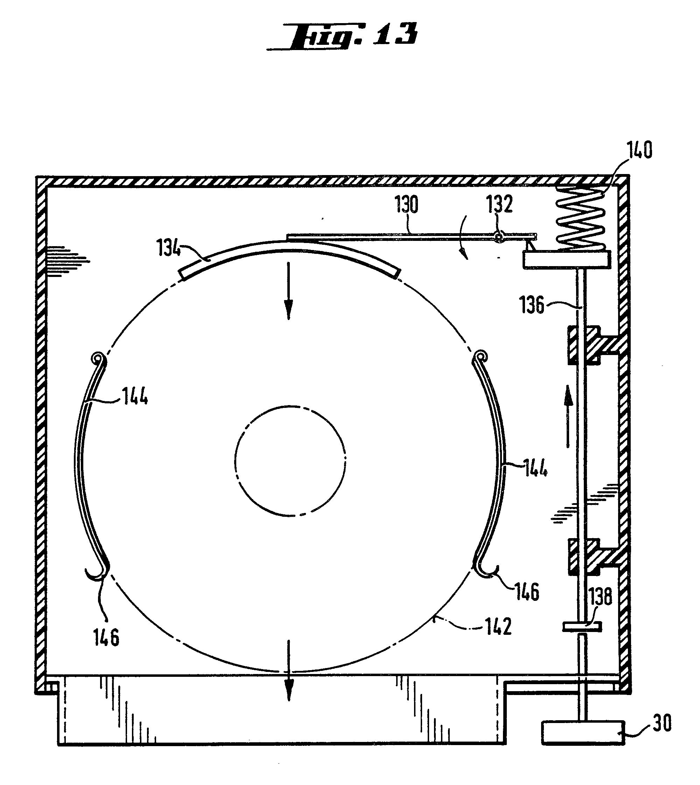

Fig. 13 zeigt eine erste derartige Förderanordnung; es wird dabei angenommen, dass der Aufbau im übrigen der Fig. 1 entspricht.

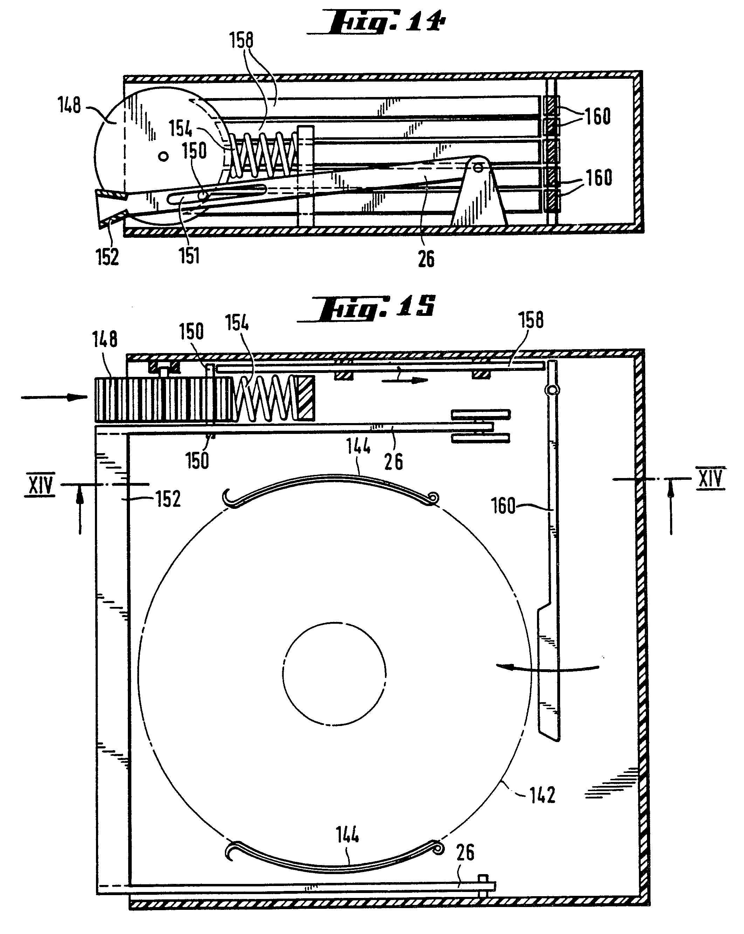

Jedem Aufnahmefach ist ein eigenes Ausschubgestänge zugeordnet, bestehend aus einem Auswerfhebel 130, der um eine Drehachse 132 schwenkbar ist und mit seinem längeren Hebelarm, der einen an die Kontur der Disc angepassten Schuh 134 trägt, sich an deren gehäuseinnere Kante anlegt. Am kürzeren Hebelarm greift eine Auslösestange 136 an, deren anderes Ende mit einer Tastplatte 138 versehen ist. Die Auslösestangen 136 sind gegen die Vorspannung von Federn 140 verschieblich. In jeder Raststellung der Grifftaste 30 steht diese vor einer der Tastplatten 138. Die Grifftaste 30 ist selbst einwärts verschieblich, so dass durch Druck auf sie die Bewegung auf die Tastplatte, von dieser auf die Stange 136 und von dieser auf den Hebel 130 übertragen und die Disc 142 auswärts geschoben wird. Im Aufnahmefach sind zwei an die Disckontur angepasste Blattfedern 144 montiert, die beim Ausschub der Disc aufgespreizt werden und verhindern, dass die Disc lose im Fach liegt oder lose in der Ausschubstellung wird, da in der letzteren die freien Enden 146 der Blattfedern noch die Disc bremsen. Diese Blattfedern haben noch eine weitere Funktion, nämlich die, beim Einschub einer Disc in ein leeres Fach diese einwärts zu fördern, wenn der Benutzer die Disc soweit eingeschoben hat, dass ihr Durchmesser die freien Enden der Blattfedern passiert hat. Gibt man schliesslich den Blattfedern ein rinnenförmiges, der Disc zugewandtes Profil, so können sie zugleich die einzelnen Aufnahmefächer gegeneinander begrenzen, und es sich weiter keine zusätzlichen Wandungen zwischen diesen erforderlich. Die Funktion dieser Blattfedern 144 ist dieselbe in den Ausführungsformen nach Fig. 14, 15 und 16.

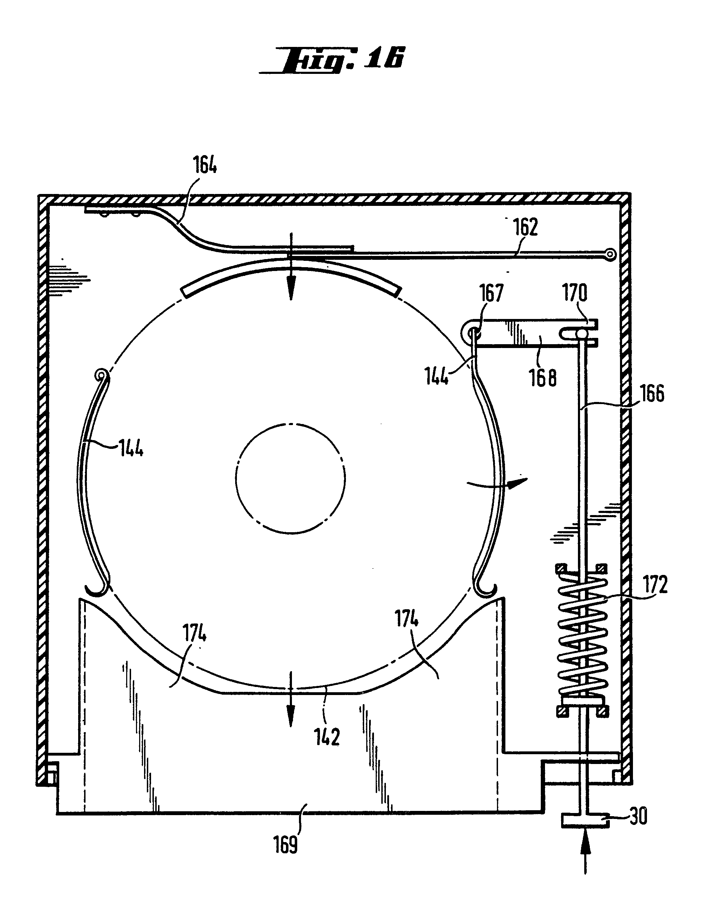

Die Ausführungsform nach Fig. 14 und 15 unterscheidet sich von der nach Fig. 1, 7 und 13 dadurch, dass anstelle der Grifftaste ein Handrad 148 vorgesehen ist, das mit einem exzentrischen Zapfen 150 in ein Langloch 151 am Hebel 26 eingreift, der die Leitanordnung 152 trägt. In jeder Rastposition ist das Handrad einwärts verschieblich gegen eine Rückstellfeder 154 und drückt dabei mit dem Zapfen 150, der sich auch zur anderen Seite des Handrads erstreckt, auf eine der Stangen 158, jeweils zugeordnet zum Ausschubhebel 160.

Bei der Ausführungsform nach Fig. 16 steht der Ausschubhebel 162 unter auswärts gerichteter Vorspannung durch eine Blattfeder 164, die jedoch nicht genügt, die Haltekraft der Blattfedern 144 zu überwinden. Erst wenn durch Druck auf die Auslösestange 166 die an einem um eine Achse 167 schwenkbaren Stellhebel 168 montierte eine Blattfeder 144 von der Disc weggeschwenkt ist, kann die Blattfeder 164 die Disc weit genug ausschieben, dass sie vom Benutzer im Einlass der Leitanordnung 169 erfasst werden kann. Beim Loslassen der Grifftaste 30 überträgt die Stange 166 über die Gabel 170 die Vorspannung ihrer Rückstellfeder 172 auf den Stellhebel 168, so dass dieser wieder in seine Ausgangsstellung zurückkehrt. Wegen der Hebelarmverhältnisse genügt die Vorspannung der Rückstellfeder 172, die am Stellhebel montierte Blattfeder 144 in ihrer Normalposition zu halten, während eine Disc eingeschoben wird, so dass die von den beiden Blattfedern gemeinsam ausgeübte einwärts gerichtete Kraft auf die Disc ausreicht, die Ausschubfeder 164 wieder vorzuspannen.

Wenn, wie oben erwähnt, die Blattfedern 144 selbst als Begrenzung der einzelnen Aufnahmefächer dienen, empfiehlt es sich, die Leitanordnung in Gehäuserichtung etwas zu verlängern, indem auf den Auslass noch eine von konkav gewölbten Wandungen begrenzte Führung folgt, damit die Disc genau in die rinnenförmiges Profil aufweisenden Blattfedern einlaufen kann. Solche Führungsansätze beidseits der Symmetrieachse der Disc sind in Fig. 16 bei 174 angedeutet.

**Patentansprüche**

1. Behälter für Schall- oder Bildplatten oder ähnliche flache Aufzeichnungsträger mit einem Gehäuse (20), in dem die Platten (24) in eng benachbarten Aufnahmefächern (22) unterbringbar und einzeln entnehmbar sind, gekennzeichnet durch eine Leitanordnung (34) mit einer Einlassöffnung (38), die breiter ist als die Breite der Aufnahmefächer in Richtung der Plattendicke, und mit einer Auslassöffnung (40), die mit jedem Aufnahmefach wahlweise in Ausfluchtung bringbar ist.

2. Behälter nach Anspruch 1, dadurch gekennzeichnet, dass die Leitanordnung (34) relativ zu dem Gehäuse (20) und zu den Aufnahmefächern (22) beweglich ist.

3. Behälter nach Anspruch 1, dadurch gekennzeichnet, dass eine Vorrichtung (130–138, 148–160, 162–172) zum Herausbefördern der Platten aus ihren Aufnahmefächern vorgesehen ist.

4. Behälter nach Anspruch 3, dadurch gekennzeichnet, dass die Platten (24) mittels der Vorrichtung durch die Leitanordnung (34) hindurchförderbar und an deren Einlassöffnung (38) präsentierbar sind.

5. Behälter nach den Ansprüchen 2 und 4, dadurch gekennzeichnet, dass zumindest ein Teil (148, 150, 154) der Fördervorrichtung gemeinsam mit der Leitanordnung (152) beweglich ist.

6. Behälter nach Anspruch 3, dadurch gekennzeichnet, dass jedem Aufnahmefach eine eigene Fördervorrichtung (130–138) zugeordnet ist.

7. Behälter nach Anspruch 1 oder 3, dadurch gekennzeichnet, dass eine Haltevorrichtung (144) zum lösbaren Arretieren von in den Aufnahmefächern (22) befindlichen Platten (24) vorgesehen ist.

8. Behälter nach Anspruch 1, dadurch gekennzeichnet, dass die Leitanordnung (112) starr mit dem Gehäuse (114) verbunden ist und im Gehäuse eine relativ zu der Leitanordnung bewegliche, die Aufnahmefächer enthaltende Baugruppe (118) untergebracht ist.

9. Behälter nach Anspruch 2, dadurch gekennzeichnet, dass das Gehäuse (20) eine frontseitige Öffnung aufweist, durch die alle Aufnahmefächer (22) zugänglich sind, und dass die Leitanordnung (34) in dieser Gehäuseöffnung bewegbar ist.

10. Behälter nach Anspruch 9, dadurch gekennzeichnet, dass der Leitanordnung Blenden (44) zugeordnet sind, die den nicht von der Leitanordnung eingenommenen Teil der Gehäuseöffnung abdecken.

11. Behälter nach Anspruch 10, dadurch gekennzeichnet, dass die Blenden (44) einen Teil der Leitanordnung bilden.

12. Behälter nach Anspruch 9, dadurch gekennzeichnet, dass die Leitanordnung an das Gehäuse angelenkte Klappen (60) umfasst.

13. Behälter nach Anspruch 1, dadurch gekennzeichnet, dass die Leitanordnung manuell in Ausfluchtposition bewegbar und in dieser einrastbar ist.

14. Behälter nach Anspruch 13, gekennzeichnet, durch einen Verstellhebel (26) für die Leitanordnung.

15. Behälter nach Anspruch 13, gekennzeichnet durch ein Verstell-Handrad (104) für die Leitanordnung.

16. Behälter nach Anspruch 12, dadurch gekennzeichnet, dass die Leitanordnung (60) an Hebelarmen (26) angeordnet ist, die nahe der der Gehäuseöffnung gegenüberliegenden Gehäuserückwand angelenkt sind.

17. Behälter nach Anspruch 13, dadurch gekennzeichnet, dass jeder Einrastposition der Leitanordnung ein eigenes, manuell betätigbares Einstellorgan (84) zugeordnet ist.

18. Behälter nach den Ansprüchen 3 und 13, dadurch gekennzeichnet, dass ein Betätigungsorgan (30) für die Verstellung der Leitanordnung (34) zugleich für die Herausbeförderung der Platten (24) betätigbar ist.

19. Behälter nach Anspruch 18, dadurch gekennzeichnet, dass das Betätigungsorgan (30) in einer ersten Richtung für die Verstellung der Leitanordnung (24) und in einer zweiten Richtung für die Herausbeförderung der Platten beweglich ist.

20. Behälter nach den Ansprüchen 19 und 6, dadurch gekennzeichnet, dass das Betätigungsorgan (30) in jeder Rastposition mit einem Übertragungsorgan (138) der Fördervorrichtung des betreffenden Aufnahmefaches koppelbar ist.

21. Behälter nach Anspruch 7, dadurch gekennzeichnet, dass die Haltevorrichtung (144) federnd ausgebildet ist.

22. Behälter nach Anspruch 21, dadurch gekennzeichnet, dass die Haltevorrichtung (144) derart ausgebildet ist, dass sie auf eine im Fach befindliche Platte eine von der Leitanordnung weg gerichtete Kraft ausübt.

23. Behälter nach Anspruch 22, dadurch gekennzeichnet, dass die Haltevorrichtung (144) Blattfedern umfasst, die sich seitlich an die Plattenkanten (142) anlegen.

24. Behälter nach den Ansprüchen 18 und 22, dadurch gekennzeichnet, dass die Haltevorrichtung (144) mittels des Betätigungsorgans (30) inaktivierbar ist.

25. Behälter nach Anspruch 22, dadurch gekennzeichnet, dass ein Federspeicher (164) vorgesehen ist, mittels dem eine Platte nach Inaktivierung der Haltevorrichtung (144) aus dem Aufnahmefach herausförderbar ist.

**Claims**

1. Container for gramophone records or video discs (24) or similar flat recording media, with a housing (20) in which the discs (24) may be accomodated in closely spaced adjacent compartments (22) and removed individually, characterised by a guide arrangement (34) with an inlet opening (38) that is wider than the width of the storage compartments in the direction of the disc thickness, and with an outlet opening (40) which may be brought according to choice into alignment with each storage compartment.

2. Container according to claim 1, characterised in that the guide arrangement (34) is movable relative to the housing (20) and to the storage compartments (22).

3. Container according to claim 1, characterised in that a device (130–138, 148–160, 162–172) for transporting the discs out of their storage compartments is provided.

4. Container according to claim 3, characterised in that the discs (24) may be conveyed by means of the device through the guide arrangement (34) and presented at the inlet opening (38) thereof.

5. Container according to claims 2 and 4, characterised in that at least a part (148, 150, 154) of the transporting device is movable jointly with the guide arrangement (152).

6. Container according to claim 3, characterised in that each storage compartment is coordinated with its own transporting device (130–138).

7. Container according to claim 1 or 3, characterised in that a retaining means (144) is provided for the releasable locking of discs (24) located in the storage compartments (22).

8. Container according to claim 1, characterised in that the guide arrangement (112) is rigidly joined to the housing (114), and there is accomodated in the housing (118) an assembly containing the storage compartments that is movable relative to the guide arrangement (34).

9. Container according to claim 2, characterised in that the housing (20) has a front opening through which all storage compartments (22) are accessible, and the guide arrangement (34) is movable in this housing opening.

10. Container according to claim 9, characterised in that the guide arrangement has slats (44) assigned to it which cover the part of the housing opening not covered by the guide arrangement.

11. Container according to claim 10, characterised in that the slats (44) form part of the guide arrangement.

12. Container according to claim 9, characterised in that the guide arrangement includes flaps (60) hinged to the housing.

13. Container according to claim 1, characterised in that the guide arrangement may be moved manually into the alignment position and may be locked in this position.

14. Container according to claim 13, characterised by an adjusting lever (26) for the guide arrangement.

15. Container according to claim 13, characterised by an adjusting hand-wheel (104) for the guide arrangement.

16. Container according to claim 12, characterised in that the guide arrangement (60) is arranged on lever arms (26) which are pivotally attached close to the housing rear wall opposite the housing opening.

17. Container according to claim 13, characterised in that each locked position of the guide arrangement is coordinated with its own, manually operable, adjusting element (84).

18. Container according to claims 3 and 13, characterised in that an actuating element (30) for the adjustment of the guide arrangement (34) may be actuated simultaneously for transporting the discs (24) outwards.

19. Container according to claim 18, characterised in that the actuating element (30) may be moved in a first direction for the adjustment of the guide arrangement (24) and in a second direction for transporting the discs outwards.

20. Container according to claims 19 and 6, characterised in that the actuating element (30) may be coupled in each locked position with a transfer element (138) of the transporting device of the storage compartment in question.

21. Container according to claim 7, characterised in that the retaining means (144) is of resilient construction.

22. Container according to claim 21, characterised in that the retaining means (144) is constructed in such a manner that it exerts on a disc located in the compartment a force directed away from the guide arrangement.

23. Container according to claim 22, characterised in that the retaining means (144) comprises leaf springs which lie laterally against the edges (142) of the disc.

24. Container according to claims 18 and 22, characterised in that the retaining means (144) may be disabled by means of the actuating element (30).

25. Container according to claim 22, characterised in that a spring-loaded system (164) is provided, by means of which a disc can be conveyed out of the storage compartment after disabling of the retaining means (144).

## Revendications

1. Boîte pour disques sonores ou disques vidéo ou supports d'enregistrement plats analogues comportant un boîtier (20) dans lequel il est possible de placer des disques (24) dans des compartiments (22) étroitement juxtaposés et de les retirer individuellement, caractérisée par un système de guidage (34) comportant une verture d'entrée (38) dont la largeur est supérieure à celle des compartiments dans le sens de l'épaisseur de disque, et une ouverture de sortie (40) qu'il est possible d'amener sélectivement dans l'alignement de chaque compartiment.

2. Boîte selon la revendication 1, caractérisée en ce que le système de guidage (34) est mobile par rapport au boîtier (20) et aux compartiments (22).

3. Boîte selon la revendication 1, caractérisée en ce qu'il est prévu un dispositif (130–138, 148–160, 162–172) pour extraire les disques de leurs compartiments.

4. Boîte selon la revendication 3, caractérisée en ce que le dispositif permet de déplacer les disques (24) à travers le système de guidage (34) et de les présenter à son ouverture d'entrée (38).

5. Boîte selon les revendications 2 et 4, caractérisée en ce qu'au moins une partie (148, 150, 154) du dispositif de déplacement est mobile conjointement avec le système de guidage (152).

6. Boîte selon la revendication 3, caractérisée en ce que chaque compartiment comporte son propre dispositif de déplacement (130–138).

7. Boîte selon les revendications 1 ou 3, caractérisée en ce qu'un dispositif de retenue (144) avec un arrêt libérable est prévu pour les disques (124) se trouvant dans les compartiments (22).

8. Boîte selon la revendication 1, caractérisée en ce que le système de guidage (112) est relié rigidement au boîtier (114) et qu'un ensemble (118) contenant les compartiments est monté mobile dans le boîtier par rapport au système de guidage.

9. Boîte selon la revendication 2, caractérisée en ce que le boîtier (20) comprend une ouverture côté frontal permettant d'accéder à tous les compartiments (22), et en ce que le système de guidage (34) est monté mobile dans cette ouverture du boîtier.

10. Boîte selon la revendication 9, caractérisée en ce que des cadres (44) sont associés au système de guidage et recouvrent la partie de l'ouverture du boîtier non occupée par le système de guidage.

11. Boîte selon la revendication 10, caractérisée en ce que les cadres (44) forment une partie du système de guidage.

12. Boîte selon la revendication 9, caractérisée en ce que le système de guidage comporte des volets (60) montés articulés sur le boîtier.

13. Boîte selon la revendication 1, caractérisée en ce que le système de guidage peut être amené manuellement dans une position d'alignment et qu'il peut être verrouillé dans celle-ci.

14. Boîte selon la revendication 13, caractérisée en ce qu'il est prévu un levier de réglage (26) pour le système de guidage.

15. Boîte selon la revendication 13, caractérisée en ce qu'il est prévu une roue de réglage à main (104) pour le système de guidage.

16. Boîte selon la revendication 12, caractérisée en ce que le système de guidage (60) est disposé sur des bras de levier (26) qui sont montés articulés à proximité de la paroi arrière du boîtier opposée à l'ouverture du boîtier.

17. Boîte selon la revendication 13, caractérisée en ce qu'un organe de réglage particulier à commande manuelle (84) est associé à chaque position de verrouillage du système de guidage.

18. Boîte selon les revendications 3 et 13, caractérisée en ce qu'un organe de commande (30) pour déplacer le système de guidage (34) peut être actionné en même temps pour extraire les disques (24).

19. Boîte selon la revendication 18, caractérisée en ce que l'organe de commande (30) est mobile dans une première direction pour le déplacement du système de guidage (24) et dans une deuxième direction pour l'extraction des disques.

20. Boîte selon les revendications 19 et 6, caractérisée en ce que l'organe de commande (30) peut être accouplé dans chaque position de verrouillage à un organe de transmission (138) du dispositif de déplacement du compartiment correspondant.

21. Boîte selon la revendication 7, caractérisée en ce que le dispositif de retenue (144) est du type élastique.

22. Boîte selon la revendication 21, caractérisée en ce que le dispositif de retenue (144) est conçu de telle sorte qu'il exerce une force sur un disque contenu dans le compartiment dans une direction opposée au système de guidage.

23. Boîte selon la revendication 22, caractérisée en ce que le dispositif de retenue (144) comprend des ressorts à lame venant se placer latéralement contre les bords du disque (142).

24. Boîte selon les revendications 18 et 22, caractérisée en ce que le dispositif de retenue (144) peut être rendu inopérant par l'organe de commande (30).

25. Boîte selon la revendication 22, caractérisée en ce qu'il est prévu un accumulateur à ressort (164) pour expulser un disque du compartiment après avoir rendu le dispositif de retenue (144) inopérant.

# Fig. 1

# Fig. 7

# Fig. 2

# Fig. 8

0193545

Fig. 3

76  70                    48      32

IX

72

40

76      50

IX

Fig. 9

76                    48

III

40  70

74

50    22  24

11

*Fig. 4*

*Fig. 10*

# _Fig. 5_

XI

48

- 106 -

- 100 -

104

102

50

106

102

# _Fig. 11_

108

104

106

V

102

100

48

22  24  50

# *Fig. 6*

# *Fig. 12*

*Fig. 13*

**Fig. 14**

**Fig. 15**

# _Fig. 16_